(19) Europäisches Patentamt
European Patent Office
Office européen des brevets

(11) **EP 2 736 659 B1**

(12) **FASCICULE DE BREVET EUROPEEN**

(45) Date de publication et mention
de la délivrance du brevet:
**25.05.2016 Bulletin 2016/21**

(21) Numéro de dépôt: **12744109.5**

(22) Date de dépôt: **25.07.2012**

(51) Int Cl.:
***B05D 5/02*** *(2006.01)*          ***B05D 5/08*** *(2006.01)*
***A47J 27/00*** *(2006.01)*

(86) Numéro de dépôt international:
**PCT/FR2012/051767**

(87) Numéro de publication internationale:
**WO 2013/014393 (31.01.2013 Gazette 2013/05)**

(54) **ARTICLE CHAUFFANT COMPRENANT UN REVÊTEMENT THERMOSTABLE MICROSTRUCTURÉ ET PROCÉDÉ DE FABRICATION D'UN TEL ARTICLE**

KOCHUTENSIL MIT EINER MIKROSTRUKTURIERTEN HITZESTABILEN BESCHICHTUNG UND VERFAHREN ZUR HERSTELLUNG EINES SOLCHEN

COOKWARE COMPRISING A MICROSTRUCTURED HEAT-STABLE COATING AND METHOD OF MANUFACTURING SUCH AN ARTICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2011 FR 1156733**

(43) Date de publication de la demande:
**04.06.2014 Bulletin 2014/23**

(73) Titulaire: **SEB S.A.**
**69130 Ecully (FR)**

(72) Inventeurs:
• **PERILLON, Jean-Luc**
 **F-26130 Saint Paul Trois Chateaux (FR)**
• **LE BRIS, Stéphanie**
 **F-73000 Chambéry (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A1- 2 308 607     EP-A2- 1 016 466**
**WO-A2-2010/012944     DE-U1- 29 923 595**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne de manière générale des articles recouverts d'un revêtement thermostable, et plus particulièrement des articles chauffants comprenant un revêtement thermostable présentant une microstructuration superficielle. La présente invention concerne également un procédé de fabrication de tels articles.

Les articles concernés par la présente invention peuvent notamment être des articles culinaires tels que des poêles, des casseroles, ou des sauteuses, des grilles de barbecue, des semelles, des fers à repasser, ou encore des plaques de lisseurs de cheveux.

Par article chauffant, on entend, au sens de la présente invention, un article qui possède son propre système de chauffage, ou qui est chauffé par un système extérieur et qui est apte à transmettre l'énergie calorifique apportée par ce système à un matériau ou objet tiers au contact dudit article.

Par microstructuration superficielle, on entend, au sens de la présente invention, une couche superficielle de rugosité micrométrique.

Par rugosité micrométrique, on entend, au sens de la présente invention, un relief présentant des motifs constitués par des variations locales au niveau de la surface de la couche superficielle de l'ordre du micron.

Pour l'utilisateur d'un article culinaire, il est particulièrement intéressant qu'au cours de la cuisson, les aliments accrochent le moins possible, et ce sans utiliser de graisses additionnelles, et qu'ensuite le nettoyage de l'article utilisé soit le plus facile et rapide possible.

Actuellement, les revêtements d'articles culinaires chauffants, par exemple ceux réalisés à base de polymères fluorés (notamment à base de PTFE) ou à base de céramique (notamment obtenus par voie sol-gel), sont intrinsèquement anti-adhérents et hydrophobes de par leur nature chimique, comme enseigné notamment dans les brevets français FR 2904206 et FR 2915205. L'angle de contact statique $\Theta$ entre ces revêtements et l'eau est de l'ordre de 115° à température ambiante et diminue lorsque la température des revêtements augmente, ce qui a pour effet qu'à la température de cuisson des aliments, on atteint une valeur d'angle de contact statique faible, de l'ordre de 60°, ce qui n'est pas acceptable.

On comprend donc qu'il y ait un intérêt à développer des revêtements qui soient hydrophobes tant à température ambiante, qu'à des températures plus élevées, et en particulier aux températures d'utilisation de ces articles chauffants (par exemple à la température de cuisson dans le cas d'un article culinaire).

Par ailleurs, il est connu que des propriétés physiques (comme la rugosité) confèrent également à une surface donnée des propriétés d'hydrophobie et d'auto-nettoyage. Ainsi, on peut observer, dans la nature et plus particulièrement sur les feuilles de lotus, un phénomène de super-hydrophobie (également appelé « effet lotus ») lié à la rugosité micrométrique de ces feuilles : ce phénomène se manifeste par un angle de contact statique pouvant atteindre jusqu'à 160°.

L'obtention de telles structures est particulièrement difficile, voire impossible à réaliser sur des revêtements antiadhésifs avec les techniques d'enduction classique (pulvérisation, rouleau, rideau, sérigraphie) pour lesquelles on cherche plutôt un effet nivelant (c'est-à-dire le plus lisse possible). C'est ainsi que, même lorsque l'on structure la surface du substrat sur laquelle le revêtement est déposé, il n'est pas possible de conserver à la surface de ce dernier une surface réellement superhydrophobe.

Plusieurs types de techniques sont connus pour microstructurer la surface d'un article.

Il est par exemple possible d'incorporer dans la composition de revêtement une substance non miscible susceptible d'être suffisamment bien dispersée dans la composition de revêtement, et qui doit être ensuite éliminée par traitement thermique ou chimique. Une telle technique présente cependant l'inconvénient d'être difficile à généraliser et à réaliser en milieu industriel. En effet, le contrôle de la qualité de la dispersion sous forme liquide, puis dans les différentes phases de fabrication (séchage, cuisson, et éventuellement post-traitement), ainsi que le post-traitement lui-même (par exemple par une dissolution sélective d'une charge telle que le carbonate de calcium) sont générateurs de surcoût, lié à la nécessité de postes supplémentaires, masquage de protection, lavages et rinçages pour assurer le fait que le revêtement est de grade alimentaire (c'est-à-dire pouvant être en contact avec des aliments). De plus ces opérations génèrent des effluents qu'il faut également traiter.

Une autre solution est enseignée par le brevet allemand DE 4434425 qui décrit la production de revêtements antiadhésifs sur la surface d'un substrat en métal mou, par exemple en aluminium, spécialement pour les revêtements de casseroles. Le procédé de fabrication de DE 4434425 comprend une étape consistant à rendre rugueuse la surface du substrat, puis une étape consistant à revêtir cette surface rugueuse avec une ou plusieurs couches de matériau dur, par exemple avec des couches de revêtement dur anodisé, puis avec une ou plusieurs couches de matériau antiadhésif à base de résine fluorocarbonée tels que le polytétrafluoroéthylène (PTFE), le copolymère de TFE-hexafluoropropylène (FEP) ou le copolymère de TFE-éthylène (ETFE). La rugosité de surface peut notamment être obtenue par projection thermique ou par traitement de conversion. Or, ce sont des techniques qui n'autorisent qu'une maîtrise partielle des paramètres moyens définissant la rugosité de surface obtenue, cette dernière n'étant par conséquent pas localement contrôlée. Ainsi, l'anti-adhésivité du revêtement obtenu n'est non seulement pas totalement satisfaisante, mais elle n'est pas non plus rigoureusement constante sur toute la surface dudit revêtement. En particulier, comme il est difficile d'assurer une répartition homogène, on obtient assez facilement une distribution des rugosités très large qui génère des variations importantes d'angles de contact.

Une autre solution est enseignée par la demande de brevet US 2005/170098 qui décrit un substrat notamment en verre, en céramique ou en métal, présentant au moins une surface autonettoyante comprenant une couche de revêtement ayant une structure de surface micro-rugueuse, qui est au moins en partie hydrophobe. Cette couche micro-rugueuse est obtenue par application d'un mélange contenant une fritte de verre et des particules de structuration ayant un diamètre moyen de l'ordre de 1,1 à 50 $\mu$m, et de préférence compris entre 0,2 et 20 $\mu$m. L'application de la couche micro-rugueuse est suivie d'une cuisson classique conduisant à la fusion de la fritte de verre. Cette technique de microstructuration n'autorise qu'une maîtrise partielle des paramètres moyens définissant la microrugosité de surface obtenue, cette dernière n'étant pas, par conséquent, localement contrôlée.

Une autre solution est encore enseignée par la demande de brevet européen EP 2308607, qui décrit un revêtement antiadhésif multicouche comprenant une première couche microstructurée, sur laquelle est déposée une deuxième couche submicrostructurée se présentent sous forme de particules de résine fluorocarbonée (par exemple le PTFE, le PFA et le FEP), qui peuvent notamment présenter un diamètre compris entre 50 et 300 nm. La première couche qui peut comporter des particules minérales, par exemple des particules de SiC ou PPSO$_2$ ou encore d'alumine, et la deuxième couche peut comporter, outre les particules fluorées dispersées, des whiskers (notamment à base de titanate de potassium. Les deux couches du revêtement antiadhésif sont déposées par pulvérisation à la flamme. Elles peuvent être formées sur une surface du substrat préalablement macrostructurée, notamment par sablage. EP 2308607 enseigne donc un revêtement antiadhésif présentant une double structuration (voir même triple si le support est sablé), dont la rugosité des couches de surface est avantageusement comprise entre 2 et 50 $\mu$m pour la première couche, et entre 0,1 et 5 $\mu$m pour la couche microstructurée superficielle, c'est-à-dire de l'ordre du micron. En ce qui concerne la première couche microstructurée, la distance entre deux motifs du relief (créé par les particules minérales de SiC ou PPSO$_2$), il est compris entre 30 et 50 $\mu$m mais peut aller jusque 100 $\mu$m, ce qui est la traduction d'une variation d'amplitude par rapport à la distance moyenne très supérieure à 10%.

Une autre solution est encore enseignée par la demande de internationale WO 2010/136848 qui décrit un procédé de fabrication de revêtements poreux avec une structure contrôlée de taille microscopique ou nanométrique, utilisant une méthode d'impression de type jet d'encre. Le revêtement a une épaisseur comprise entre 10 nm et 10 mm et sa porosité est créée de manière à ce que la distribution de la taille des pores soit anisotrope. Toutefois, le procédé de WO 2010/136848 est complexe et coûteux à mettre en oeuvre, car il nécessite de passer par une étape intermédiaire de réalisation d'une couche temporaire de particules pour la création de la microporosité, couche temporaire qu'il faut ensuite éliminer En outre, WO 2010/136848 ne concerne ni un article chauffant, ni a *fortiori* un article culinaire qui subissent typiquement des contraintes thermiques.

Il est également possible de réaliser une microstructuration de surface par lithographie [Langmuir, 2000, 16, 7777-7782, Ultrahydrophobic Surfaces. Effects of Topography Length Scales on Wettability, D. Öner and T.J. McCarthy]. Toutefois, il s'agit d'un procédé qui structure une surface de façon non directe, ce qui implique d'utiliser un masque pour le transfert du motif, et de réaliser un traitement chimique postérieur pour rendre la surface hydrophobe. La surface ainsi microstructurée, qui est en silicone, est revêtue d'une couche superficielle de nature chimique différente (par exemple à base de siloxane ou de résine fluorocarbonée), qui présente l'inconvénient d'être peu durable à l'usage. En l'occurrence, cette couche superficielle est susceptible de se dégrader par abrasion, entraînant une diminution, voire même une perte de l'effet anti-adhésif. Par ailleurs, on observe un autre inconvénient qui est celui d'un faible lien entre les deux couches : de ce fait la couche microstructurée peut être facilement enlevée si la surface revêtue est manipulée comme par exemple lors de contacts répétés lors de la cuisson des aliments. Pour résoudre les inconvénients de l'art antérieur, la demanderesse a découvert qu'il était possible de structurer de manière directe (c'est-à-dire sans transfert de motif, par exemple via un masque) et précise un revêtement hydrophobe destiné à recouvrir un article chauffant, sans post-traitement ultérieur.

Pour cela, la Demanderesse a mis au point un procédé de fabrication d'un article chauffant, comprenant une étape de structuration de surface utilisant l'impression jet d'encre. Il s'agit d'une technique qui consiste à projeter des gouttelettes d'encre depuis une petite ouverture jusqu'à des positions parfaitement déterminées sur un support, de manière à créer une image. L'impression à jet d'encre est la seule technique d'impression connue actuellement qui soit sans contact.

Plus particulièrement, la présente invention a pour objet un article chauffant comprenant :

- un substrat présentant deux faces opposées,
- un revêtement thermostable comprenant :

  - au moins une couche de base comportant au moins un liant thermostable, ladite couche de base étant disposée sur l'une des faces du substrat, et
  - une couche de microstructuration superficielle comprenant un liant thermostable de même nature chimique que celui de la couche de base, ladite couche de microstructuration recouvrant en partie ou intégralement ladite couche de base et étant frittée solidairement avec celle-ci, ladite couche de microstructuration superficielle présentant un relief avec des motifs constitués par des variations locales du niveau de sa surface, ledit relief ayant une régularité de pas moyen Ar avec une variation SAr d'au plus 10% (et de préférence d'au plus 3%) de la valeur dudit pas moyen Ar, de part et d'autre de cette valeur Ar.

Par revêtement thermostable, on entend, au sens de la présente invention, un revêtement dont les propriétés mécaniques et physico-chimiques n'évoluent pas de manière significative en fonction de la température d'utilisation de l'article (qui peut être par exemple de 50°C à 300°C dans le cas d'un article culinaire).

Les liants thermostables des couches de base et de structuration doivent être de même nature chimique ou de nature chimique équivalente, aptes à se lier entre eux par des liaisons covalentes, des liaisons van der Waals ou ioniques. Il peut s'agir par exemple de matériaux polymériques de même classe chimique ou présentant des paramètres de solubilité voisins, ou encore de matériaux inorganiques ou hybrides.

Par exemple, si le liant thermostable de la couche de base est une résine fluorocarbonée, celui de la couche de microstructuration qui recouvre la couche de base est dans ce cas également une résine fluorocarbonée. De même, si le liant thermostable de la couche de base est un matériau sol-gel, il en sera de même pour le liant de la couche de microstructuration.

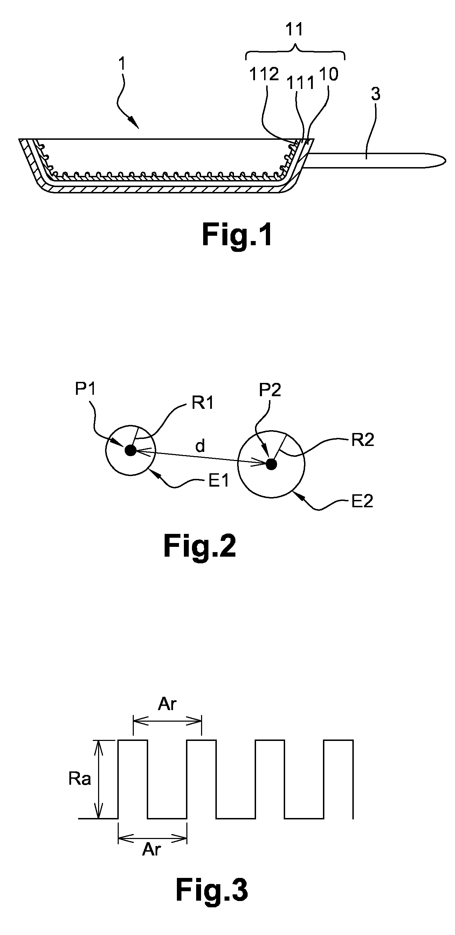

Par régularité de pas moyen Ar du relief ou revêtement, on entend, au sens de la présente invention la moyenne arithmétique, sur la surface d'évaluation, de la distance entre deux motifs du relief, comme illustré sur la figure 3 ci-après.

La valeur très faible de la variation Sar (inférieure à 10% du pas moyen Ar) traduit une grande homogénéité dans le positionnement des motifs, rendue possible par l'utilisation d'une technique d'impression à jet d'encre. Cette homogénéité dans le positionnement des motifs confère au revêtement thermostable de l'article selon l'invention une hydrophobie de nature physique, qui est combinée avec l'hydrophobie intrinsèque du revêtement d'origine chimique (conférée par les liants thermostables des couches de base et de structuration). L'hydrophobie de nature physique a pour effet que l'eau ne peut plus parvenir jusque dans les interstices de la surface du revêtement. Cela a pour conséquence que les points de contact entre l'eau et la surface du revêtement sont diminués de façon considérable, de sorte que l'angle de contact statique entre le revêtement et l'eau est supérieur à celui que l'on mesurerait avec une surface d'un revêtement de même nature, mais qui n'aurait pas été structuré par impression à jet d'encre conformément à la présente invention.

De manière avantageuse, le relief du revêtement thermostable de l'invention présente une profondeur de rugosité moyenne Ra dont la variation SRa est d'au plus 10% de la valeur de ladite profondeur de rugosité moyenne Ra, de part et d'autre de cette valeur Ra.

Par profondeur de rugosité moyenne Ra, on entend, au sens de la présente invention, la hauteur du motif par rapport au niveau le plus bas du relief, comme illustré sur la figure 3.

Avantageusement, le pas moyen Ar du relief est compris entre 5 $\mu$m et 75 $\mu$m, et la profondeur de rugosité moyenne Ra du relief est comprise entre 5 $\mu$m et 50 $\mu$m, et de préférence de l'ordre de 10 $\mu$m. Ces valeurs de paramètres de rugosité correspondent à une surface superhydrophobe.

On peut envisager différents types d'articles conformes à l'invention, de différentes forme et réalisés dans différents matériaux.

Ainsi, le substrat peut être en un matériau choisi parmi les métaux, le verre, les céramiques et les matières plastiques.

A titre de substrats métalliques utilisables dans le procédé selon l'invention, on peut avantageusement citer les substrats en aluminium ou en alliage d'aluminium anodisé ou non, ou en aluminium poli, brossé ou microbillé, sablé, traité chimiquement ou en acier inoxydable poli, brossé ou microbillé, ou en fonte de fer ou d'aluminium, en titane ou en cuivre martelé ou poli.

L'article chauffant selon l'invention peut notamment être un article culinaire, et en particulier un article culinaire dont une des faces opposées est une face intérieure concave destinée à être disposée du côté d'aliments susceptibles d'être introduits dans ledit article, et une seconde desdites faces opposées est une face extérieure convexe destinée à être disposée vers une source de chaleur.

A titre d'exemples non limitatifs d'articles culinaires conformes à la présente invention, on citera notamment des articles culinaires tels que les casseroles et les pôles, les woks et les sauteuses, les faits-touts et les marmites, les crêpières, les grills, les moules et plaques pour la pâtisserie, les plaques et grilles de barbecue, les bols de préparation.

On peut également envisager d'autres types de substrats qui ne sont pas limités au seul domaine culinaire. Ainsi, on peut également envisager à titre d'articles chauffants conformes à l'invention des articles électroménagers tels que des fers à repasser, des fers à friser, des lisseurs à cheveux etc., des pots isothermes (pour cafetières par exemple), des bouilloires ou des bols mixeurs.

Selon un premier mode de réalisation de l'article selon l'invention, le liant thermostable de la couche de base et celui de la couche de microstructuration comprennent, chacun une résine fluorocarbonée ou un mélange de résines fluorocarbonées, seule ou en mélange avec d'autres résines thermostables.

Selon une première variante de ce mode de réalisation, la couche de microstructuration se présente sous forme de composés fluorocarbonés constituant le relief du revêtement thermostable, lesdits composés fluorocarbonés étant frittés solidairement avec la couche de base.

Selon une deuxième variante de ce mode de réalisation, la couche de microstructuration comporte en outre des microparticules présentant chacune une taille comprises entre 5 μm et 10μm et étant constituées d'un matériau ayant une température de fusion supérieure d'au moins 20°C à la température de fusion des liants thermostables de la couche de base et de la couche de microstructuration, les microparticules étant régulièrement disposées sur la couche de base et recouvertes par un film continu du liant thermostable de la couche de microstructuration, les microparticules créant des variations locales du niveau de surface dudit film qui a une épaisseur comprise entre 500 nm et 3 μm.

Selon une particularité de cette deuxième variante de réalisation, les microparticules présentent avantageusement une dureté supérieure à 5 sur l'échelle de Mohs, ce qui confère un revêtement thermostable de l'article chauffant une résistance à la rayure accrue.

A titre de microparticules utilisables dans le cadre de cette deuxième variante de réalisation, on peut notamment citer les microparticules d'oxyde d'aluminium, de silice ou de zirconium.

Selon un deuxième mode de réalisation de l'article, le liant thermostable de la couche de base et celui de la couche de microstructuration sont chacun en un matériau sol-gel comprenant au moins une matrice d'au moins un polyalcoxylate métallique.

De manière avantageuse,, la couche de microstructuration est recouverte par une couche de finition dont l'épaisseur est inférieure à la variation SRa de la rugosité de la couche de microstructuration.

La présente invention a également pour objet un procédé de fabrication d'un article chauffant selon l'invention comprenant les étapes suivantes :

a) fourniture d'un substrat comprenant deux faces opposées; puis

b) réalisation d'un revêtement thermostable comprenant :

- la formation, au moins sur l'une des faces du substrat, d'au moins une couche de base comportant au moins un liant thermostable, et
- la formation, sur tout ou partie de la couche de base, d'une couche de microstructuration comprenant en partie ou totalement un liant thermostable de même nature que celui de la couche de base, la formation de la couche de microstructuration comprenant l'impression jet d'encre par projection en des positions (P1, P2, ..., PN) déterminées de microgouttes d'une dispersion dans un liquide (eau ou solvant organique) d'un matériau de structuration, ladite impression étant réalisée avec un pas d'impression (d) micrométrique , et

c) cuisson du revêtement thermostable pour fritter le liant de la couche de base solidairement avec le liant de la couche de microstructuration, de manière à rigidifier l'ensemble et former un relief avec des motifs constitués par des variations locales du niveau de la surface du revêtement thermostable. Le procédé selon l'invention permet la réalisation d'une microstructuration de surface par apport d'un excédent localisé de matière, cet apport étant réalisé de manière sélective et précise par impression de type impression jet d'encre.

Avantageusement, le pas d'impression du procédé selon l'invention est compris entre 5 μm et 75 μm, ce qui permet de réaliser un relief dont le pas moyen est compris entre 5 et 75 μm.

Selon un premier mode de réalisation du procédé, les liants thermostables des couches de base et de microstructuration comprennent une résine fluorocarbonée ou un mélange de résines fluorocarbonées, seul(e) ou en mélange avec d'autres résines thermostables. La résine fluorocarbonée de la couche de base peut être identique ou différente de celle de la couche de microstructuration

Selon une première variante de ce mode de réalisation du procédé, la structuration du revêtement thermostable est réalisée en utilisant uniquement le liant thermostable de la couche de microstructuration comme matériau de structuration, ce liant étant présent dans la dispersion à raison de 2% à 20% en poids par rapport au poids total de la dispersion.

Selon une deuxième variante du premier mode de réalisation du procédé, la structuration du revêtement thermostable est réalisée en deux étapes :

1) on utilise d'abord, en tant que matériau de structuration des microparticules d'un matériau ayant une température de fusion supérieure d'au moins 20°C à la température de fusion des liants thermostables des couches de base et de microstructuration, ces microparticules étant dispersées dans un liquide (solvant organique ou eau) à raison de 2% à 20% en poids par rapport au poids total de la dispersion,

2) puis après l'impression par jet d'encre de microgouttes de cette dispersion, on forme, après étuvage, un film continu recouvrant les microparticules, ce film comprenant un liant thermostable, qui est celui de la couche de microstructuration.

Les microparticules préalablement déposées par impression jet d'encre créent des variations locales du niveau de surface dudit film. Ces microparticules sont telles que définies précédemment.

De manière avantageuse, la dispersion de microparticules dans un solvant comprend en outre un agent filmogène à basse température, dont la teneur est avantageusement comprise entre 1 et 10% en poids du poids total des microparticules.

A titre d'agents filmogènes utilisables dans le cadre de la présente invention, on peut notamment citer des dérivés de la cellulose (comme par exemple la carboxyméthylcellulose) ou des polymères (notamment méthacryliques).

Avantageusement, les microparticules peuvent être traitées en surface pour faciliter l'étalement ultérieur du film recouvrant les microparticules. Ce traitement de surface peut être réalisé à l'aide de silanes fluorés, de surfactants polymères comme des polyoxéthanes fluorés (ayant notamment une masse moléculaire Mw de 3000 g) ou encore à l'aide d'oligomères de l'HFPO (hexafluoropropyloxyde) modifiés avec des silanes et/ou des polyéthylènes glycols.

Selon un deuxième mode de réalisation du procédé, les liants thermostables des couches de base et de microstructuration comprennent au moins un précurseur sol-gel de type alcoxyde métallique dispersé en milieu alcoolique et de l'eau pour initier la réaction sol-gel.

Dans ce deuxième mode de réalisation du procédé, on projette avantageusement plusieurs microgouttes de la dispersion de matériau de structuration, pour augmenter la profondeur de la rugosité créée par empilement des couches.

De préférence, les microgouttes projetées en chaque position donnée sont séchées avant projection d'une autre microgoutte en cette position.

D'autres avantages et particularités de la présente invention résulteront de la description qui va suivre, donnée à titre d'exemple non limitatif et faite en référence aux figures annexée :

- la figure 1 représente une vue schématique en coupe d'un article culinaire conforme à l'invention,
- la figure 2 représente un schéma de principe illustrant la projection de microparticules dans le procédé selon l'invention,
- la figure 3 représente un schéma de principe d'une vue en coupe d e la couche de microstructuration selon l'invention,
- la figure 4 représente une vue schématique en coupe d'un premier exemple d'article chauffant selon l'invention,
- la figure 5 représente une vue schématique en coupe d'un deuxième exemple d'article chauffant l'invention,
- la figure 6 représente une vue schématique en coupe d'un troisième exemple d'article chauffant selon l'invention.

Les éléments identiques représentés sur les figures 1 à 6 sont identifiés par des références numériques identiques.

L'article chauffant 1 comprend un substrat 10 présentant deux faces opposées, et un revêtement thermostable 11.

La figure 1 illustre à titre d'exemple d'article chauffant selon l'invention, une casserole 1 comprenant un support 10 se présentant sous forme de calotte creuse, et une poignée de préhension 3. La face intérieure du support 10 (concave) est revêtue d'un revêtement thermostable 11 selon l'invention, qui comprend :

- au moins une couche de base 111 comportant au moins un liant thermostable, et
- une couche de microstructuration 112 comprenant un liant thermostable de même nature ou de nature chimiquement équivalente à celui de la couche de base.

Préférentiellement, la couche de base 111 est continue et couvre entièrement la face du substrat 10 sur laquelle elle est déposée.

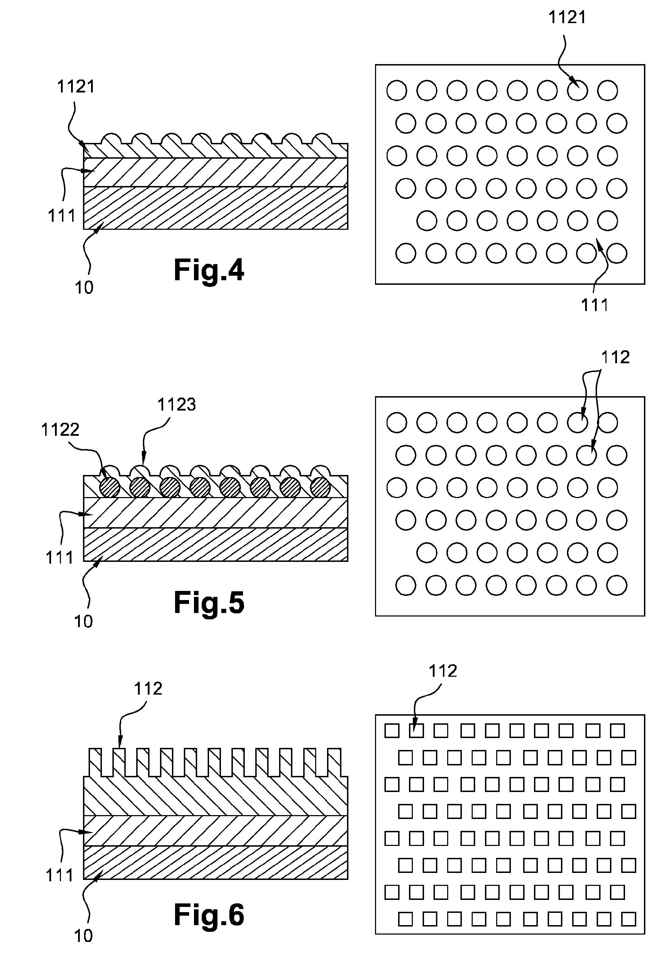

Comme illustré plus précisément sur les figures 4 à 6 et décrit dans les exemples 1 à 3 correspondants, la couche de base 111 peut être multicouche.

La couche de microstructuration 112 recouvre au moins en partie (et de préférence intégralement) la couche de base 111 en étant frittée solidairement avec celle-ci. La couche de base 111 et la couche de microstructuration 112 forment ainsi un tout solidaire constituant le revêtement thermostable 11. La couche de microstructuration 112 présente un relief avec des motifs constitués par des variations locales du niveau de sa surface, qui est caractérisé par les paramètres suivants (illustrés sur la figure 3) :

- la régularité, de pas moyen Ar, et
- la profondeur, de rugosité moyenne Ra.

Selon l'invention, le relief du revêtement thermostable a une régularité de pas moyen Ar avec une variation Sar d'au plus 10% de la valeur dudit pas moyen Ar, de part et d'autre de cette valeur. Le paramètre de pas moyen Ar correspond à la distance moyenne entre deux motifs premiers voisins. Ainsi, la distance entre deux motifs premiers voisins est définie avec une variation maximale autorisée de 10% de sa valeur moyenne de part et d'autre de cette valeur, quel que soit le couple de motifs premiers voisins considérés de la microstructuration. De préférence, la variation maximale autorisée est de 3% de la valeur de la distance entre deux motifs premiers voisins.

En outre, le relief du revêtement thermostable (en l'occurrence de la couche de microstructuration) présente préférentiellement une profondeur de rugosité moyenne Ra définie avec une variat SRa d'au plus 10% de la valeur de ladite profondeur de rugosité moyenne Ra, de part et d'autre de cette valeur. La rugosité moyenne Ra correspond à la hauteur des motifs s'étendant perpendiculairement à la couche de base 111, en d'autres termes à la différence d'élévation entre le sommet des motifs et le niveau de la couche de base 111. Ainsi, la hauteur de chaque motif est définie avec une variation maximale autorisée de 10% de la hauteur moyenne (par rapport à cette valeur) calculée sur l'ensemble des motifs. De préférence, la variation maximale autorisée (tout comme pour le pas moyen Ar) est seulement de 3% de la valeur de la hauteur moyenne calculée sur l'ensemble des motifs.

Typiquement, la valeur du pas moyen Ar du relief est comprise entre 5 μm et 75 μm, et est de préférence égale à 35 μm. Dans ce cas, la variation maximale autorisée sur le pas moyen Ar est de ±2 μm pour un pas moyen Ar de 20 μm et est de ±5 μm pour un pas moyen Ar de 50 μm. Pour la valeur préférée de pas moyen Ar de 35 μm, on a mesuré une variation SAr égale à ±2,5 μm, ce qui correspond à environ 7% de la valeur du pas moyen Ar considéré (de part et d'autre de cette valeur).

Typiquement, la profondeur de rugosité moyenne Ra du relief est comprise entre 5 et 50 μm, et de préférence égale à 10 μm. Ainsi, la variation maximale autorisée sur la profondeur de rugosité moyenne Ra est de ± 1,5 μm pour une profondeur de rugosité moyenne Ra égale à 15 μm. Pour la valeur préférée de la profondeur de rugosité moyenne Ra égale à 10 μm, on a mesuré une variation SRa égale à ±0,5 μm, correspondant à 5% de la valeur de la profondeur de rugosité moyenne Ra considérée.

Le procédé de fabrication d'un article chauffant selon l'invention tel que décrit ci-dessus comprend les étapes suivantes :

a) fourniture du substrat 10,
b) réalisation, au moins sur l'une des faces du substrat 10, d'un revêtement thermostable 11, et
c) cuisson du revêtement thermostable 11.

La réalisation du revêtement thermostable 11 comprend :

- la formation, au moins sur l'une des faces du substrat 10, d'au moins une couche de base 111 comportant au moins un liant thermostable, et
- la formation, sur tout ou partie de la couche de base, d'une couche de microstructuration 112 comprenant en partie ou totalement un liant thermostable de même nature que celui de la couche de base.

### Formation de la couche de base

La couche de base, éventuellement multicouche, est plus particulièrement déposée avec les techniques d'enduction classique de revêtements thermostables (pulvérisation, rouleau, rideau, sérigraphie).

Toutefois, elle peut aussi être déposée, comme la couche de microstructuration, par impression de type jet d'encre, la matière projetée comportant ledit liant thermostable de la couche de base. Dans ce cas, le pas est ajusté pour obtenir une couche continue.

### Formation de la couche de microstructuration

Comme l'illustre plus précisément la figure 2, la formation de la couche de microstructuration 111 comprend plus particulièrement l'impression par projection en des positions P1, P2,... PN déterminées de microgouttes d'une dispersion dans un solvant d'un matériau de structuration. Les différentes positions de projection P1, P2,... PN sont distribuées sur la surface du substrat selon un réseau homogène. L'impression est réalisée avec un pas d'impression d micrométrique, qui est avantageusement compris entre 5 μm et 75 μm, et préférentiellement égal à 35 μm (correspondant à la valeur préférée du pas moyen Ar entre deux motifs premiers voisins du relief de la couche de microstructuration 112).

On utilise une imprimante commerciale habituellement destinée à l'impression de décors. Cette imprimante offre typiquement une définition égale à 360 dpi (« *dot per inch* »), ce qui correspond à un pas d'impression d égale à environ 70 μm entre deux positions de projection qui sont des positions premières voisines. Cette imprimante comprend une plaque avec une pluralité de buses permettant la projection simultanée sur la couche de base d'une microgoutte par chaque buse en chaque position de projection d'un ensemble de positions P1, P2,... PN couvert par la plaque. Dans ce contexte, pour atteindre une définition d'impression de 720 dpi correspondant à un pas d'impression d de 35 μm, il faudra déplacer la tête d'impression d'un demi-pas.

Comme illustré sur la figure 2, la projection d'une microgoutte en une position de projection P1 provoque l'étalement E1 de la microgoutte projetée sur la surface de la couche de base. Cet étalement présente un rayon R1 qui dépend non seulement du volume de la microgoutte projetée, mais également du mouillage de la surface de la couche de base non cuite par la microgoutte projetée, et plus particulièrement par le solvant de la dispersion projetée.

Le pas d'impression d et le rayon R1 ou R2 de chaque étalement E1 et E2 d'une ou plusieurs microgouttes en une position P1 ou P2 de projection déterminée sont préférentiellement liés par la relation suivante :

$$1/3 < 2Ri/d < 1$$

où Ri correspond au rayon de l'étalement Ei en la position Pi de projection.

Par ailleurs, il est aussi possible d'utiliser une imprimante à une seule buse. En fonctionnement, l'unique buse de la plaque peut être déplacée, par un chariot au-dessus de la couche de base, du pas d'impression considéré ou d'un multiple du pas d'impression considéré respectivement.

Il peut aussi être envisagé de faire déplacer par un chariot la couche de base, sous la buse fixe du pas d'impression considéré ou d'un multiple du pas d'impression considéré respectivement.

Préférentiellement, la direction de projection de chaque microgoutte en une position de projection est normale à la surface locale de la couche de base en cette position, par inclinaison du substrat, et/ou de la buse et/ou de la plaque de buses.

**Cuisson**

La cuisson du revêtement thermostable permet de fritter le liant thermostable de la couche de base 111 solidairement avec le liant thermostable de la couche de microstructuration 112, ce qui conduit à rigidifier l'ensemble et former un relief avec des motifs constitués par des variations locales du niveau de la surface du revêtement thermostable 11.

L'invention est illustrée plus en détail dans les exemples suivants.

Dans ces exemples, sauf indication contraire, tous les pourcentages et parties sont exprimés en poids.

## PRODUITS ET DISPOSITIFS

**Matériau de structuration**

- poudres de PTFE : TF 9207 PTFE de Dyneon ou poudre FLUO HT-LS de Micro Powders, dont les particules ont une taille comprise entre 5 $\mu$m et 10 $\mu$m pour ne pas risquer de boucher les buses de l'imprimante (exemple 1),
- poudres d'oxyde d'aluminium, de zircone ou de silice (exemple 2),
- précurseurs sol-gel à mélange de méthyltriéthoxysilane (MTES) et de tétraéthoxysilane (TEOS) (exemple 3),
- pigments, dont la taille de particules est inférieure à 5 mm (exemple 3),

**Substrats**

- disques en aluminium de 31 cm de diamètre et d'épaisseur 2,4 mm.

**Dispositif d'impression**

- imprimante commerciale avec des buses de taille adaptée.

## EXEMPLES

EXEMPLE 1 : **article culinaire avec un revêtement thermostable comportant une couche de microstructuration en résine fluorocarbonée.**

On applique sur un substrat en aluminium (préalablement traité pour une meilleure adhérence) un revêtement multicouche à base de PTFE sur lequel on applique par jet d'encre une dispersion poudre de PTFE dans un solvant polaire ou un milieu aqueux, à raison de 2% à 20% en poids par rapport au poids total de la dispersion.

Le solvant peut être de deux types différents. Selon une première variante, le solvant est plus particulièrement de type polaire, notamment choisi parmi les esters, les éthers ou les cétones. Dans ce cas, la solution peut en outre avantageusement comprendre un tensioactif de type fluoré pour faciliter la stabilité de la suspension de poudre de PTFE.

Selon une deuxième variante, la solution peut être préparée en milieu aqueux, et nécessairement en présence d'un tensio-actif de type fluoré.

Quelle que soit la nature du milieu (aqueux ou solvant polaire), la teneur en tensio-actif est avantageusement comprise entre 0.05% et 5% du poids de poudre.

A titre de tensio-actifs fluorés utilisables dans les dispersions de PTFE, on peut notamment citer les polyoxéthanes fluorés (avec Mw de l'ordre de 3000 g) ou les oligomères de l'HFPO (hexafluoropropyloxyde) modifiés avec des amines ou des polyéthylènes glycols.

Après formation de la couche de microstructuration par impression jet d'encre, le revêtement thermostable est soumis à une cuisson à 400-450°C pendant 10 minutes, au cours de laquelle le solvant et, le cas échéant, le tensio-actif sont évaporés, tandis que les microparticules de poudre de PTFE sont frittées solidairement avec la couche de base et forment des aspérités 1121, qui constituent ainsi les motifs du relief du revêtement thermostable 11. Lorsque plusieurs microparticules de PTFE sont projetées en une même position de projection, celles-ci sont alors frittées non seulement avec la couche de base, mais également entre elles.

La mesure de l'angle de contact entre une goutte d'eau et la surface du revêtement prend une valeur comprise entre 140° et 160° à l'ambiante et une valeur d'environ 100 ° à chaud, i.e. à la température de cuisson des aliments, soit environ 200°C.

Le revêtement thermostable ainsi obtenu est illustré par la figure 4.

EXEMPLE 2 : **article culinaire avec un revêtement thermostable comportant des microparticules d'oxyde métallique recouvertes par un film continu en résine fluorocarbonée.**

La couche de base 111 est réalisée de manière similaire à l'exemple 2, sur un substrat en aluminium également identique.

Par contre, le matériau de structuration est ici constitué par des microparticules 1122 d'alumine, de silice ou encore de zircone. Ces microparticules 1122 sont dispersées dans de l'eau ou dans un solvant polaire à raison de 2% à 20% en poids par rapport au poids total de la dispersion, avec ou sans tensioactif.

On peut utiliser à titre de solvant polaire et de tensioactif les mêmes qu'à l'exemple 1.

Par ailleurs, la solution peut avantageusement contenir également un agent filmogène à basse température permettant une fixation temporaire de chaque étalement E1, E2, ..., EN d'une ou plusieurs microgouttes de la dispersion sur la couche de base. Cet agent filmogène est préférentiellement un dérivé de la cellulose, tel que la carboxyméthylcellulose, ou un polymère méthacrylique. La teneur en agent filmogène représente entre 1 et 10% en poids de microparticules 1122.

L'impression des microgouttes de la dispersion est suivie par la formation d'un film 1123 continu recouvrant les microparticules, ce film 1123 comprenant un liant thermostable, qui est aussi à base de PTFE et à la surface duquel les microparticules 1122 créent des variations locales du niveau de surface. Le film 1123 est déposé selon les techniques d'enduction classiques de revêtements thermostables (pulvérisation, rouleau, rideau, sérigraphie).

Avantageusement, préalablement à la formation du film 1123, la poudre de microparticules 1122 est traitée afin de faciliter l'étalement ultérieur du film 1123 protecteur. Des traitements à base de silanes fluorés, de polyoxéthanes fluorés (avec Mw de l'ordre de 3000 g) ou des oligomères de l'HFPO (hexafluoropropyloxyde) modifiés avec des silanes et /ou des polyéthylènes glycols sont particulièrement efficaces.

Après formation de la couche de microstructuration, l'ensemble est cuit à 400-450°C pendant 10 minutes. Tandis que le solvant et, le cas échéant, le tensioactif présents dans la solution sont évaporés lors de la cuisson, le film 1123 de PTFE recouvrant les microparticules 1122 fritté solidairement avec la couche de base 111.

La mesure de l'angle de contact entre une goutte d'eau et la surface du revêtement prend une valeur comprise entre 140° et 160° à l'ambiante et une valeur d'environ 100 ° à chaud, i.e. à la température de cuisson des aliments, soit à environ 200°C.

Le revêtement thermostable 11 ainsi obtenu est illustré par la figure 5.

<u>EXEMPLE 3</u> : **article culinaire avec un revêtement thermostable comportant une couche de microstructuration en polyalcoxylate.**

Le revêtement thermostable de l'exemple 3 se différencie de celui de l'exemple 1 par la nature des liants thermostables des couches de base et de microstructuration, de type polyalcoxylate métallique.

Un revêtement sol-gel de type polyalcoxylate métallique (constituant la couche de base 111) est appliqué sur un substrat en aluminium préalablement traité (pour permettre une adhérence maximale de ce revêtement).

On applique ensuite par impression jet d'encre une dispersion de TEOS et de MTES dans un milieu alcoolique, qui comprend en outre :

- de l'eau pour permettre d'initier une réaction d'hydrolyse-condensation,
- un acide organique tel que l'acide acétique pour catalyser et stabiliser la réaction d'hydrolyse-condensation,
- une dispersion de silice colloïdale, et
- des pigments dont la taille n'excède pas 5 $\mu$m (pour ne pas risquer de boucher les buses de l'imprimante).

Si on souhaite que la hauteur des motifs soit élevée, il faut appliquer plusieurs couches de cette dispersion.

L'ensemble est cuit à 250°C-300°C pendant quinze minutes.

On obtient alors un revêtement céramique présentant une rugosité micrométrique maitrisée. On mesure un angle de contact statique $\theta$ compris entre 120° et 150° à température ambiante et un angle de contact statique $\theta$ supérieur à 100° à une température de 200°C.

**Revendications**

**1.** Article chauffant (1) comprenant :

- un substrat (10) présentant deux faces opposées (101, 102),
- un revêtement thermostable (11) comprenant :

- au moins une couche de base (111) comportant au moins un liant thermostable, ladite couche de base étant disposée sur l'une des faces du substrat, et
- une couche de microstructuration superficielle (112) comprenant un liant thermostable de même nature chimique que celui de la couche de base, ladite couche de microstructuration (112) recouvrant en partie ou intégralement ladite couche de base (111) et étant frittée solidairement avec celle-ci,

ladite couche de microstructuration superficielle (110) présentant un relief avec des motifs constitués par des variations locales du niveau de sa surface, ledit relief ayant une régularité de pas moyen Ar avec une variation SAr d'au plus 10% de la valeur dudit pas moyen Ar, de part et d'autre de cette valeur Ar.

**2.** Article chauffant (1) selon la revendication 1, **caractérisé en ce que** ledit relief présente une profondeur de rugosité moyenne Ra avec une variation SRa d'au plus 10% de la valeur de ladite profondeur de rugosité moyenne Ra, de part et d'autre de cette valeur Ra.

**3.** Article chauffant (1) selon la revendication 1 ou la revendication 2, **caractérisé en ce que** le pas moyen Ar du relief est compris entre 5 $\mu$m et 75 $\mu$m.

4. Article chauffant (1) selon la revendication 2 ou la revendication 3, **caractérisé en ce que** la profondeur de rugosité moyenne Ra du relief est comprise entre 5 $\mu$m et 50 $\mu$m.

5. Article chauffant (1) selon l'une quelconque des revendications 1 à 4, **caractérisé en ce que** le liant thermostable de la couche de base (111) et celui de la couche de microstructuration (112) comprennent une résine fluorocarbonée ou un mélange de résines fluorocarbonées, seul(e) ou en mélange avec d'autres résines thermostables.

6. Article chauffant (1) selon l'une quelconque des revendications 1 à 4, **caractérisé en ce que** le liant thermostable de la couche de base (111) et celui de la couche de microstructuration (112) sont en un matériau sol-gel comprenant au moins une matrice d'au moins un polyalcoxylate métallique.

7. Article chauffant (1) selon la revendication 5, **caractérisé en ce que** la couche de microstructuration (112) se présente sous forme de composés fluorocarbonés (1121) constituant le relief du revêtement thermostable, lesdits composés fluorocarbonés étant frittés solidairement avec la couche de base.

8. Article chauffant (1) selon la revendication 5, **caractérisé en ce que** la couche de microstructuration (112) comporte en outre des microparticules (1122) présentant chacune une taille comprise entre 5 $\mu$m et 10 $\mu$m et étant constituées d'un matériau ayant une température de fusion supérieure d'au moins 20°C à la température de fusion des liants thermostables de la couche de base (111) et de la couche de microstructuration (112), lesdites microparticules (1122) étant régulièrement disposées sur la couche de base et étant recouvertes par un film (1123) continu dudit liant thermostable de la couche de microstructuration (112), lesdites microparticules (1122) créant des variations locales du niveau de surface dudit film.

9. Article chauffant (1) selon la revendication 8, **caractérisé en ce que** les microparticules (1122) ont une dureté supérieure à 5 sur l'échelle de Mohs.

10. Article chauffant (1) selon la revendication 8 ou la revendication 9, **caractérisé en ce que** les microparticules (1122) sont des particules d'oxyde d'aluminium, de silice ou de zirconium.

11. Article chauffant (1) selon l'une quelconque des revendications 1 à 10, **caractérisé en ce que** la couche de microstructuration est recouverte par une couche de finition dont l'épaisseur est inférieure à la variation SRa de la rugosité de la couche de microstructuration.

12. Procédé de fabrication d'un article chauffant comprenant les étapes suivantes :

    a) fourniture d'un substrat (10) comprenant deux faces opposées (101, 102); puis
    b) réalisation d'un revêtement thermostable (11) comprenant :

        - la formation, au moins sur l'une des faces du substrat (101, 102), d'au moins une couche de base (111) comportant au moins un liant thermostable, et
        - la formation, sur tout ou partie de la couche de base (111), d'une couche de microstructuration (112) comprenant en partie ou totalement un liant thermostable de même nature que celui de la couche de base (111), la formation de la couche de microstructuration (112) comprenant l'impression jet d'encre par projection en des positions (P1, P2, ..., PN) déterminées de microgouttes d'une dispersion dans un solvant d'un matériau de structuration, ladite impression étant réalisée avec un pas d'impression (d) micrométrique, et

    c) cuisson du revêtement thermostable (111) pour fritter le liant de la couche de base (111) solidairement avec le liant de la couche de microstructuration (112), de manière à rigidifier l'ensemble et former un relief avec des motifs constitués par des variations locales du niveau de la surface du revêtement thermostable (11).

13. Procédé selon la revendication 12, **caractérisé en ce que** le pas d'impression (d) est compris entre 5 $\mu$m et 75 $\mu$m.

14. Procédé selon la revendication 12 ou 13, **caractérisé en ce que** les liants thermostables des couches de base (111) et de microstructuration (112) comprennent une résine fluorocarbonée ou un mélange de résines fluorocarbonées, seul(e) ou en mélange avec d'autres résines thermostables.

15. Procédé selon la revendication 14, **caractérisé en ce que** le matériau de structuration est entièrement constitué par le liant thermostable de la couche de microstructuration, le liant termostable étant présent dans la dispersion à raison de 2% à 20% en poids par rapport au poids total de la dispersion.

16. Procédé selon la revendication 14, **caractérisé en ce que** le matériau de structuration comporte des microparticules (1122) d'un matériau ayant une température de fusion supérieure d'au moins 20°C à la température de fusion des liants thermostables des couches de base et de microstructuration, en dispersion dans le solvant à raison de 2% à 20% en poids par rapport au poids total de la dispersion, et **en ce que** l'impression des microgouttes de la dispersion est suivie par la formation d'un film (1123) continu recouvrant lesdites microparticules (1122), ledit film (1123) comprenant le liant thermostable de la couche de microstructuration (112), et lesdites microparticules (1122) créant des variations locales du niveau de surface dudit film (1123).

17. Procédé selon la revendication 16, **caractérisé en ce que** les microparticules (1122) ont une dureté supérieure à 5 sur l'échelle de Mohs.

18. Procédé selon la revendication 16 ou 17, **caractérisé en ce que** les microparticules (1122) sont en oxyde d'aluminium, en silice ou en zircone.

19. Procédé selon l'une quelconque des revendications 12 à 14, **caractérisé en ce que** les liants thermostables des couches de base (111) et de microstructuration (112) comprennent de l'eau et au moins un précurseur sol-gel de type alcoxyde métallique dispersé en milieu alcoolique.

20. Procédé selon la revendication 19, **caractérisé en ce qu'**il comprend un séchage de la ou des microgouttes projetées en chaque position avant projection d'une autre microgoutte en cette position.

**Patentansprüche**

1. Heizender Gegenstand (1), folgendes umfassend:

    - ein Substrat (10), das zwei gegenüberliegende Seiten (101, 102) aufweist,
    - eine temperaturbeständige Beschichtung (11), folgendes umfassend:
    - zumindest eine Basisschicht (111) zumindest ein temperaturbeständiges Bindemittel umfassend, wobei die besagte Basisschicht auf einer der Seiten des Substrats angeordnet ist, und
    - eine oberflächliche Mikrostrukturierungsschicht (112), ein temperaturbeständiges Bindemittel mit derselben chemischen Eigenschaft umfassend, wie jenes der Basisschicht, wobei die besagte Mikrostrukturierungsschicht (112) die besagte Basisschicht (111) teilweise oder vollständig abdeckt und mit dieser fest versintert ist,

    wobei die besagte oberflächliche Mikrostrukturierungsschicht (110) ein Relief mit Motiven aufweist, die durch lokale Variationen im Bereich seiner Oberfläche gebildet werden, wobei das besagte Relief eine Gleichmäßigkeit des mittleren Abstands Ar mit einer Variation SAr von höchstens 10% des Werts des besagten mittleren Abstands Ar beiderseits dieses Ar-Werts aufweist.

2. Heizender Gegenstand (1) nach Anspruch 1, dadurch gekennzeichet, dass das besagte Relief eine mittlere Rauhtiefe Ra mit einer Variation SRa von höchstens 10% des Wertes der besagten mittleren Rauhtiefe Ra beiderseits dieses Ra-Werts aufweist.

3. Heizender Gegenstand (1) nach Anspruch 1 oder Anspruch 2, dadurch gekennzeichet, dass der mittlere Abstand Ar des Reliefs zwischen 5 $\mu$m und 75 $\mu$m liegt.

4. Heizender Gegenstand (1) nach Anspruch 2 oder Anspruch 3, dadurch gekennzeichet, dass die mittlere Rauhtiefe Ra des Reliefs zwischen 5 $\mu$m und 50 $\mu$m liegt.

5. Heizender Gegenstand (1) nach irgendeinem der Ansprüche 1 bis 4, dadurch gekennzeichet, dass das temperaturbeständige Bindemittel der Basisschicht (111) und jenes der Mikrostrukturierungsschicht (112) ein Fluorcarbon-Harz oder eine Mischung aus Fluorcarbon-Harzen alleine oder in einer Mischung mit anderen temperaturbeständigen Harzen umfassen.

6. Heizender Gegenstand (1) nach irgendeinem der Ansprüche 1 bis 4, dadurch gekennzeichet, dass das temperaturbeständige Bindemittel der Basisschicht (111) und jenes der Mikrostrukturierungsschicht (112) aus einem Sol-Gel Material sind, das zumindest eine Matrix zumindest eines Metallpolyalkoxylats umfasst.

7. Heizender Gegenstand (1) nach Anspruch 5, dadurch gekennzeichet, dass sich die Mikrostrukturierungsschicht (112) in Form von Fluorcarbon-Verbindungen (1121) präsentiert, die das Relief der temperaturbeständigen Beschichtung bilden, wobei die besagten Fluorcarbon-Verbindungen fest mit der Basisschicht versintert sind.

8. Heizender Gegenstand (1) nach Anspruch 5, dadurch gekennzeichet, dass die Mikrostrukturierungsschicht (112) darüber hinaus Mikropartikel (1122) umfasst, die jeweils eine Größe zwischen 5 $\mu$m und 10 $\mu$m aufweisen und aus einem Material gebildet werden, das eine Schmelztemperatur aufweist, die um zumindest 20°C über der Schmelztemperatur der temperaturbeständigen Bindemittel der Basisschicht (111) und der Mikrostrukturierungsschicht (112) liegt, wobei die besagten Mikropartikel (1122) gleichmäßig auf der Basisschicht angeordnet sind, und durch einen durchgehenden Film (1123) des besagten temperaturbeständigen Bindemittels der Mikrostrukturierungsschicht (112) abgedeckt werden, wobei die besagten Mikropartikel (1122) lokale Variationen des Oberflächenniveaus des besagten Films bilden.

9. Heizender Gegenstand (1) nach Anspruch 8, dadurch gekennzeichet, dass die Mikropartikel (1122) eine Härte von über 5 auf der Mohs-Skala aufweisen.

10. Heizender Gegenstand (1) nach Anspruch 8 oder Anspruch 9, dadurch gekennzeichet, dass die Mikropartikel (1122) Aluminium-, Silizium- oder Zirkoniumoxid-Partikel sind.

11. Heizender Gegenstand (1) nach irgendeinem der Ansprüche 1 bis 10, dadurch gekennzeichet, dass die Mikrostrukturierungsschicht durch eine Deckschicht abgedeckt wird, deren Stärke kleiner ist, als die Variation SRa der Rauheit der Mikrostrukturierungsschicht.

12. Verfahren zur Herstellung eines heizenden Gegenstands, die folgenden Schritte umfassend:

a) Bereitstellung eines Substrats (10), zwei gegenüberliegende Seiten (101, 102) umfassend; danach
b) Ausführung einer temperaturbeständigen Beschichtung (11), folgendes umfassend:

- die Bildung zumindest einer Basisschicht (111) zumindest auf einer der Seiten (101, 102) des Substrats, zumindest ein temperaturbeständiges Bindemittel umfassend, und
- die Bildung auf der gesamten Basisschicht (111) oder auf einem Teil davon einer Mikrostrukturierungsschicht (112), zum Teil oder total ein temperaturbeständiges Bindemittel mit derselben Eigenschaft umfassend, wie jenes der Basisschicht (111), wobei die Bildung der Mikrostrukturierungsschicht (112) den Tintenstrahldruck durch Projektion von Mikrotröpfchen einer Dispersion in einem Lösungsmittel eines Strukturierungsmaterils in bestimmte Positionen (P1, P2, ..., PN) umfasst, wobei der besagte Druck mit einem mikrometrischen Druckabstand (d) durchgeführt wird, und

c) Brennen der temperaturbeständigen Beschichtung (111) zum festen Sintern des Bindemittels der Basisschicht (111) mit dem Bindemittel der Mikrostrukturierungsschicht (112), um die Einheit zu versteifen und ein Relief mit Motiven zu formen, die durch lokale Variationen im Bereich der Oberfläche der temperaturbeständigen Beschichtung (11) gebildet werden.

13. Verfahren nach Anspruch 12, **dadurch gekennzeichnet, dass** der Druckabstand (d) zwischen zwischen 5 μm und 75 μm liegt.

14. Verfahren nach Anspruch 12 oder 13, **dadurch gekennzeichnet, dass** die temperaturbeständigen Bindemittel der Basisschicht (111) und der Mikrostrukturierungschicht (112) ein Fluorcarbon-Harz oder eine Mischung aus Fluorcarbon-Harzen alleine oder in einer Mischung mit anderen temperaturbeständigen Harzen umfassen.

15. Verfahren nach Anspruch 14, **dadurch gekennzeichnet, dass** das Strukturierungsmaterial vollkommen durch das temperaturbeständige Bindemittel der Mikrostrukturierungschicht gebildet wird, wobei das temperaturbeständige Bindemittel mit 2 Gew.-% bis 20 Gew.-% im Verhältnis zum Gesamtgewicht der Dispersion in der Dispersion vorhanden ist.

16. Verfahren nach Anspruch 14, **dadurch gekennzeichnet, dass** das Strukturierungsmaterial Mikropartikel (1122) aus einem Material umfasst, das eine Schmelztemperatur aufweist, die um zumindest 20°C über der Schmelztemperatur der temperaturbeständigen Bindemittel der Basisschicht und der Mikrostrukturierungsschicht liegt, in Dispersion, die mit 2 Gew.-% bis 20 Gew.-% im Verhältnis zum Gesamtgewicht der Dispersion in der Dispersion vorhanden ist, und dadurch, dass auf den Druck der Mikrotröpfchen der Dispersion die Formation eines durchgehenden Films (1123) folgt, der die besagten Mikropartikel (1122) abdeckt, wobei der besagte Film (1123) das temperaturbeständige Bindemittel der Mikrostrukturierungschicht (112) umfasst, und die besagten Mikropartikel (1122) lokale Variationen des Oberflächenniveaus des besagten Films (1123) bilden.

17. Verfahren nach Anspruch 16, **dadurch gekennzeichnet, dass** die Mikropartikel (1122) eine Härte von über 5 auf der Mohs-Skala aufweisen.

18. Verfahren nach Anspruch 16 oder 17, **dadurch gekennzeichnet, dass** die Mikropartikel (1122) aus Aluminium-, Silizium- oder Zirkoniumoxid sind.

19. Verfahren nach irgendeinem der Ansprüche 12 bis 14, **dadurch gekennzeichnet, dass** die temperaturbeständigen Bindemittel der Basisschicht (111) und der Mikrostrukturierungschicht (112) Wasser und zumindest eine Sol-Gel-Vorstufe in der Art eines Metallpolyalkoxylats umfassen, das im Alkoholmilieu dispergiert ist.

**20.** Verfahren nach Anspruch 19, **dadurch gekennzeichnet, dass** es eine Trocknung des oder der Mikrotröpfchen umfasst, die in jede Position projiziert werden, bevor ein anderes Mikrotröpfchen in diese Position projiziert wird.

## Claims

**1.** Heating article (1) comprising:

- a substrate (10) having two opposite surfaces (101, 102),
- a heat-stable coating (11) comprising:
- at least one base layer (111) comprising at least one heat-stable binder, said base layer being arranged on one of the surfaces of the substrate, and
- a microstructured surface layer (112) comprising a heat-stable binder of the same chemical nature as that of the base layer, said microstructured layer (112) partly or fully covering said base layer (111) and being sintered integrally with the latter,

said microstructured surface layer (110) having a relief with patterns comprised of local variations in its surface level, said relief having a regularity in average pitch Ar with a variation SAr which is not more than 10% higher or lower than the value of said average pitch Ar.

**2.** Heating article (1) according to claim 1, **characterised in that** said relief has an average surface roughness Ra with a variation SRa which is not more than 10% higher or lower than the value of said average surface roughness Ra.

**3.** Heating article (1) according to claim 1 or claim 2, **characterised in that** the average pitch Ar of the relief is between 5 pm and 75 pm.

**4.** Heating article (1) according to claim 2 or claim 3, **characterised in that** the average surface roughness Ra of the relief is between 5 pm and 50 pm.

**5.** Heating article (1) according to any of claims 1 to 4, **characterised in that** the heat-stable binder of the base layer (111) and that of the microstructured layer (112) include a fluorocarbon resin or a mixture of fluorocarbon resins, alone or as a mixture with other heat-stable resins.

**6.** Heating article (1) according to any of claims 1 to 4, **characterised in that** the heat-stable binder of the base layer (111) and that of the microstructured layer (112) are made of a sol-gel material comprising at least one matrix of at least one metal polyalkoxylate.

**7.** Heating article (1) according to claim 5, **characterised in that** the microstructured layer (112) has the form of fluorocarbon compounds (1121) constituting the relief of the heat-stable coating, said fluorocarbon compounds being sintered integrally with the base layer.

**8.** Heating article (1) according to claim 5, **characterised in that** the microstructured layer (112) further comprises microparticles (1122) each having a size between 5 pm and 10 pm and being constituted of a material having a melting temperature greater by at least 20°C than the melting temperature of the heat-stable binders of the base layer (111) and of the microstructured layer (112), said microparticles (1122) being regularly arranged on the base layer and being covered by a continuous film (1123) of said heat-stable binder of the microstructured layer (112), said microparticles (1122) creating local variations in the surface level of said film.

**9.** Heating article (1) according to claim 8, **characterised in that** the microparticles (1122) have a hardness greater than 5 on the Mohs scale.

**10.** Heating article (1) according to claim 8 or claim 9, **characterised in that** the microparticles (1122) are particles of aluminium oxide, of silica or of zirconium.

**11.** Heating article (1) according to any of claims 1 to 10, **characterised in that** the microstructured layer is covered by a finishing layer of which the thickness is less than the variation SRa of the roughness of the microstructured layer.

**12.** Method for manufacturing a heating article comprising the following steps:

a) supplying of a substrate (10) comprising two opposite surfaces (101, 102); then
b) carrying out a heat-stable coating (11) comprising:

- the forming, at least on one of the surfaces of the substrate (101, 102), of at least one base layer (111) comprising at least one heat-stable binder, and
- the forming, over all or a portion of the base layer (111), of a microstructured layer (112) partly or entirely comprising a heat-stable binder of the same nature as that of the base layer (111), with the forming of the microstructured layer (112) comprising the inkjet printing via projection at determined positions (P1, P2, ..., PN) of microdrops of a dispersion in a solvent of a structured material, said impression being carried out with a micrometric printing pitch (d), and

c) curing of the heat-stable coating (111) in order to sinter the binder of the base layer (111) integrally with the binder of the microstructured layer (112), in such a way as to rigidify the whole and form a relief with patterns constituted by local variations in the surface level of the heat-stable coating (11).

**13.** Method according to claim 12, **characterised in that** the printing pitch (d) is between 5 pm and 75 pm.

**14.** Method according to claim 12 or 13, **characterised in that** the heat-stable binders of the base (111) and microstructured (112) layers comprise a fluorocarbon resin or a mixture of fluorocarbon resins, alone or as a mixture with other heat-stable resins.

**15.** Method according to claim 14, **characterised in that** the structured material is entirely constituted by the heat-stable binder of the microstructured layer, with the heat-stable binder being present in the dispersion at a rate of 2% to 20% by weight with respect to the total weight of the dispersion.

**16.** Method according to claim 14, **characterised in that** the structured material comprises microparticles (1122) of a material having a melting temperature greater by at least 20°C than the melting temperature of the heat-stable binders of the base and microstructured layers, in dispersion in the solvent at a rate of 2% to 20% by weight with respect to the total weight of the dispersion, and **in that** the printing of the microdrops of the dispersion is followed by the forming of a continuous film (1123) covering said microparticles (1122), said film (1123) comprising the heat-stable binder of the microstructured layer (112), and said microparticles (1122) creating local variations in the surface level of said film (1123).

**17.** Method according to claim 16, **characterised in that** the microparticles (1122) have a hardness greater than 5 on the Mohs scale.

**18.** Method according to claim 16 or 17, **characterised in that** the microparticles (1122) are made of aluminium oxide, of silica or of zirconia.

**19.** Method according to any of claims 12 to 14, **characterised in that** the heat-stable binders of the base (111) and microstructured (112) layers comprise water and at least one sol-gel precursor of the metal alkoxide type dispersed in an alcohol medium.

**20.** Method according to claim 19, **characterised in that** it comprises a drying of the microdrop or microdrops projected at each position before projection of another microdrop in this position.

**Fig.1**

**Fig.2**

**Fig.3**

1121

1121

111

**Fig.4**

10

111

112

1122

1123

111

**Fig.5**

112

10

112

112

111

**Fig.6**

10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2904206
- FR 2915205
- DE 4434425
- US 2005170098 A
- EP 2308607 A
- WO 2010136848 A

**Littérature non-brevet citée dans la description**

- **D. ÖNER ; T.J. MCCARTHY.** Ultrahydrophobic Surfaces. Effects of Topography Length Scales on Wettability. *Langmuir,* 2000, vol. 16, 7777-7782